# FASCICULE DE BREVET EUROPEEN

(11) **EP 4 390 730 B1**
(45) Date de publication et mention de la délivrance du brevet: **04.03.2026**
(21) Numéro de dépôt: 23214187.9
(22) Date de dépôt: 05.12.2023
(51) Int. Cl.: G06F 21/31, G06F 21/44, G06F 21/71

(54) **PROTECTION D'UN PROCÉDÉ D'AUTHENTIFICATION**
SCHUTZ EINES AUTHENTIFIZIERUNGSVERFAHRENS
PROTECTION OF AN AUTHENTICATION METHOD

(30) Priorité: 20.12.2022 FR 2213951
(43) Date de publication de la demande: 26.06.2024
(73) Titulaire: STMicroelectronics (Grand Ouest) SAS, 72100 Le Mans (FR)
(72) Inventeur: ARRIVE, Fabien, 35250 CHASNE-SUR-ILLET (FR); MAGNAUD, Yves, 35410 CHATEAUGIRON (FR)
(74) Mandataire: Cabinet Beaumont

(56) Documents cités:
- EP-A2- 1 677 261
- US-A1- 2005 005 131
- EMBEDDED STAFF: "Securing nonvolatile, nonresettable counters in embedded designs", 15 May 2011 (2011-05-15), pages 1 - 6, XP093066887, Retrieved from the Internet <URL:https://web.archive.org/web/20200923071045/https://www.embedded.com/securing-nonvolatile-nonresettable-counters-in-embedded-designs/> [retrieved on 20230724]

## Description

### Domaine technique

La présente description concerne de façon générale les systèmes et dispositifs électroniques, et leur utilisation concernant la mise en oeuvre de procédé d'authentification. Plus particulièrement, la présente description se rapporte à la protection, ou sécurisation, des procédés d'authentification.

### Technique antérieure

Une communication entre deux dispositifs, ou circuits, électroniques peut être précédée, pour des raisons de sécurité et/ou de confidentialité, d'une phase d'authentification. Pendant cette phase, un procédé d'authentification, mis en oeuvre par les deux dispositifs, permet de vérifier, par exemple, si les deux dispositifs sont autorisés à échanger des informations ensemble, ou, par exemple, si un dispositif est autorisé à utiliser un ou plusieurs services mis en oeuvre par l'autre dispositif. Le procédé d'authentification est un moyen de protection contre les dispositifs malveillants essayant d'accéder à des données et/ou à des fonctionnalités d'autres dispositifs, mais il peut être important de protéger la mise en oeuvre d'un procédé d'authentification.

Selon un autre exemple, un procédé d'authentification peut permettre de vérifier l'identité d'un utilisateur avant l'utilisation d'un dispositif électronique ou l'utilisation d'un ou plusieurs services mis en oeuvre par le dispositif électronique.

Il serait souhaitable de pouvoir améliorer, au moins en partie, les procédés d'authentification connus de dispositifs électroniques, et en particulier les moyens de protection connus des procédés d'authentification.

Le document US 2005/005131 concerne une carte mémoire utilisant un procédé d'authentification.

Le document EP 1 677 261 concerne un procédé de gestion de la sécurité au sein d'un dispositif électronique.

Le document Embedded Staff: "Securing nonvolatile, nonresettable counters in embedded designs" (15 mai 2011 (2011-05-15), pages 1-6, XP093066887, Extrait de !'Internet: URL:https://web.archive.org/web/20200923071045/https://www.e mbedded.com/securing-nonvolatile-nonresettable-counters-inembedded-designs/) concerne l'utilisation de compteur non ré-initialisable dans des structures embarquées.

### Résumé de l'invention

Il existe un besoin de protéger les procédés d'authentification mis en oeuvre par des dispositifs électroniques.

Il existe un besoin de protéger les procédés d'authentification contre les attaques par coupure d'alimentation.

Un mode de réalisation pallie tout ou partie des inconvénients des moyens de protection connus des procédés d'authentification.

Un mode de réalisation prévoit un procédé de protection d'un dispositif électronique et d'un procédé d'authentification contre les attaques par coupure d'alimentation.

Un mode de réalisation prévoit un procédé de protection permettant de vérifier la bonne incrémentation d'un compteur d'échecs associé à un procédé d'authentification.

Un mode de réalisation prévoit un procédé de protection mis en oeuvre par un dispositif électronique configuré pour mettre en oeuvre un procédé d'authentification et comportant une mémoire, la mémoire comprenant un ensemble de couples de cellules mémoire dont au moins un premier couple comprenant une première cellule mémoire stockant une première donnée et une deuxième cellule mémoire stockant une deuxième donnée, le premier couple étant sélectionné comme le couple actif dans lequel :
- à chaque mise en oeuvre du procédé d'authentification résultant en une réussite la première cellule mémoire dudit couple actif est réécrite avec une troisième donnée ;
- à chaque mise en oeuvre du procédé d'authentification résultant en un échec la deuxième cellule mémoire dudit couple actif est réécrite avec une quatrième donnée, puis un compteur d'échecs associé au procédé d'authentification est incrémenté, et enfin des cinquièmes données sont écrites dans une première et une deuxième cellules mémoire d'un deuxième couple de cellules mémoire différent du premier couple, le deuxième couple devenant le couple actif.

Un autre mode de réalisation prévoit un dispositif électronique configuré pour mettre en oeuvre un procédé d'authentification et un procédé de protection, le dispositif électronique comportant une mémoire comprenant un ensemble de couples de cellules mémoire dont au moins un premier couple comprenant une première cellule mémoire stockant une première donnée et une deuxième cellule mémoire stockant une deuxième donnée, le premier couple étant sélectionné comme le couple actif dans lequel :
- à chaque mise en oeuvre du procédé d'authentification résultant en une réussite la première cellule mémoire dudit couple actif est réécrite avec une troisième donnée ;
- à chaque mise en oeuvre du procédé d'authentification résultant en un échec la deuxième cellule mémoire dudit couple actif est réécrite avec une quatrième donnée, puis un compteur d'échecs associé au procédé d'authentification est incrémenté, et enfin des cinquièmes données sont écrites dans une première et une deuxième cellules mémoire d'un deuxième couple de cellules mémoire différent du premier couple, le deuxième couple devenant le couple actif.

Selon un mode de réalisation, dans un état initial toutes les cellules mémoire de l'ensemble sont effacées à l'exception des cellules mémoire du premier couple, le premier couple étant le couple actif.

Selon un mode de réalisation, quand l'ensemble ne comprend que des cellules mémoire écrites et qu'une nouvelle mise en oeuvre du procédé d'authentification résulte en un échec, une étape de remise à l'état initial est exécutée.

Selon un mode de réalisation, la mémoire est une mémoire non volatile.

Selon un mode de réalisation, la mémoire est une mémoire de type flash.

Selon un mode de réalisation, les première, deuxième, et cinquième données sont toutes identiques, et les troisième et quatrième données sont des données aléatoires.

Un autre mode de réalisation prévoit un produit-programme d'ordinateur mettant en oeuvre le procédé décrit précédemment.

Un autre mode de réalisation prévoit un support d'enregistrement de données lisible par ordinateur comprenant un produit-programme d'ordinateur décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de dispositif électronique ;
la figure 2 représente un schéma-bloc illustrant les étapes d'un mode de réalisation d'un procédé de protection d'un procédé d'authentification ;
la figure 3 représente un schéma illustrant plus en détail la mise en oeuvre du mode de réalisation de la figure 2 ; et
la figure 4 représente un schéma illustrant plus en détail un exemple de mise en oeuvre du mode de réalisation de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, aucune explication détaillée n'est donnée concernant les procédés d'authentification auxquels s'applique le procédé de protection. En effet, la plupart des procédés d'authentification usuels sont compatibles avec les modes de réalisation décrits.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la protection d'un dispositif électronique, et plus particulièrement la protection d'un compteur d'échecs associé à un procédé d'authentification face à des attaques malveillantes. En effet, il peut être utile de comptabiliser les mises en oeuvre d'un procédé d'authentification résultant en un échec, consécutives ou non, pour, par exemple, empêcher un utilisateur malveillant de s'authentifier auprès du dispositif électronique.

L'utilisation d'un tel compteur est cependant vulnérable à différents types d'attaques malveillantes, dont, par exemple, les attaques par coupure d'alimentation. En effet, dans certains cas, il peut suffire d'éteindre l'alimentation électrique dudit compteur d'échecs pour empêcher son incrémentation.

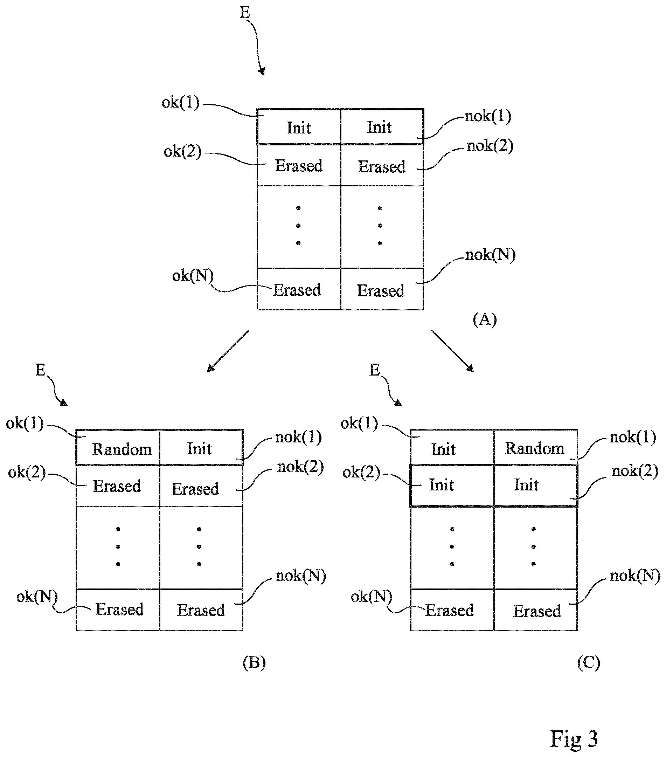

Les modes de réalisation décrits ci-après proposent la mise en oeuvre d'un mécanisme de protection associé au compteur et permettant de sécuriser l'incrémentation du compteur. Ce mécanisme comprend la réécriture et l'écriture de données spécifiques en mémoire avant et après l'incrémentation du compteur après un échec du procédé d'authentification. Ces opérations de réécriture et/ou d'écriture sont décrites en détails en relation avec la figure 3. Lorsqu'une coupure de l'alimentation a lieu, il suffit, au moment du redémarrage du dispositif, de vérifier l'état de ces données spécifiques pour déterminer si la dernière mise en oeuvre du procédé d'authentification a résulté en un échec ou en un succès.

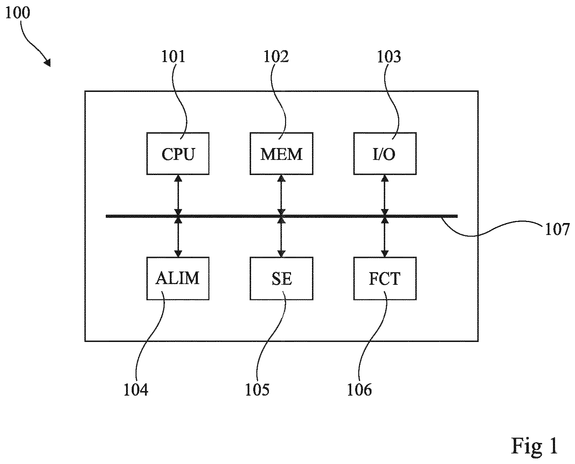

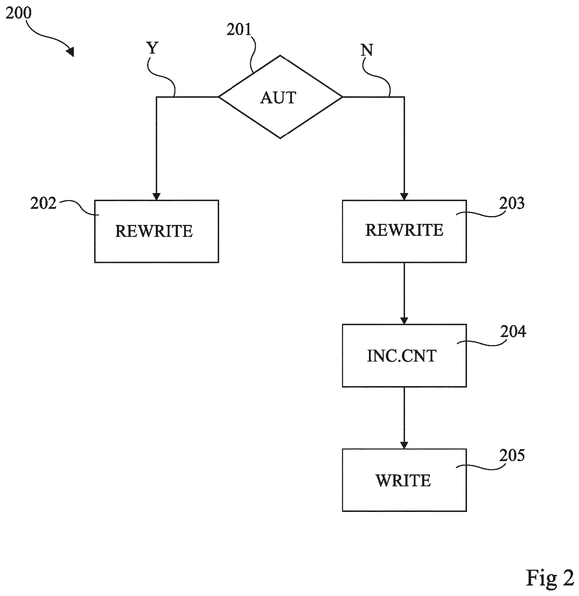

La figure 1 représente, très schématiquement et sous forme de blocs, un exemple de dispositif électronique auquel peuvent s'appliquer les modes de réalisation décrits en relation avec les figures 2 et 3.

Le dispositif 100 est un dispositif électronique adapté à traiter des données, et qui est configuré, par exemple, pour mettre en oeuvre un procédé d'authentification. Un procédé d'authentification est un procédé pendant lequel un premier dispositif, ou un utilisateur, s'identifie auprès d'un deuxième dispositif par exemple par échange d'un identifiant et d'un mot de passe, ou, par exemple, en prouvant la connaissance d'une information secrète comme un mot de passe, un numéro d'identification personnel NIP (Personal Identification Number, PIN) ou même une valeur aléatoire. Durant la mise en oeuvre du procédé d'authentification, le dispositif 100 peut indifféremment avoir le rôle du premier dispositif ou du deuxième dispositif, ou alors avoir seulement un rôle d'intermédiaire entre les premier et deuxième dispositifs. De plus, et selon un mode de réalisation, le dispositif 100 et le procédé d'authentification sont insensibles aux attaques par canaux cachés.

Dans la suite de la description, on appelle échec d'un procédé d'authentification le cas où un procédé d'authentification est mis en oeuvre mais n'aboutit pas à l'authentification du premier dispositif, ou de l'utilisateur, auprès du deuxième dispositif. De plus, on appelle réussite du procédé d'authentification le cas où le procédé d'authentification est mis en oeuvre et aboutit à l'authentification du premier dispositif auprès du deuxième dispositif.

Le dispositif 100 est, en outre, configuré pour mettre en oeuvre un compteur d'échecs associé audit procédé d'authentification. Plus particulièrement, à chaque fois que le procédé d'authentification présente un échec le compteur est incrémenté. Selon un exemple, un tel compteur d'échecs peut permettre au dispositif 100 d'empêcher une nouvelle mise en oeuvre du procédé d'authentification après un nombre d'échecs, consécutifs ou non, définis au préalable.

Le dispositif 100 comprend un processeur 101 (CPU) permettant de traiter des données. Selon un exemple, le dispositif 100 peut comprendre plusieurs processeurs adaptés chacun à traiter différents types de données. Selon un exemple particulier, le dispositif 100 peut comprendre un processeur principal et un processeur sécurisé adapté à ne traiter que des données sensibles. Selon un exemple, le processeur 101 peut être configuré pour mettre en oeuvre le procédé d'authentification et/ou le compteur d'échecs décrits précédemment.

Le dispositif 100 comprend, en outre, une ou plusieurs mémoires 102 (MEM) dans lesquelles sont stockées des données, par exemple des données binaires. Selon un exemple, le dispositif 100 comprend plusieurs types de mémoires, comme une mémoire morte, une mémoire volatile, et/ou une mémoire non volatile. Selon un mode de réalisation, le dispositif 100 comprend une mémoire non volatile, et selon un exemple préféré cette mémoire non volatile est une mémoire de type Flash, c'est-à-dire une mémoire non volatile conservant les données qu'elle stocke même après une coupure d'alimentation. De plus, certaines mémoires de type Flash présentent un mécanisme de détection et/ou de correction d'erreur.

Le dispositif 100 comprend, en outre et de façon optionnelle, un ou plusieurs circuits d'entrée/sortie 103 (I/0) permettant au dispositif 100 de transmettre et/ou recevoir des données et/ou de l'énergie avec un ou plusieurs dispositifs électroniques externes.

Le dispositif 100 comprend, en outre, un ou plusieurs circuits 104 (ALIM) prenant en charge l'alimentation en énergie du dispositif 100. Selon un exemple, les circuits 104 peuvent comprendre une ou plusieurs batteries, des circuits de conversion d'énergie, des circuits de charge, etc.

Le dispositif 100 comprend, en outre et de façon optionnelle, un ou plusieurs éléments sécurisés (secure element, SE) 105 (SE) permettant la gestion de données sensibles, comme le stockage ou l'utilisation de ces données, ou permettant, par exemple, de mettre en oeuvre le procédé d'authentification. Selon un exemple, l'élément sécurisé 105 peut être configuré pour mettre en oeuvre le procédé d'authentification et/ou le compteur d'échecs décrits précédemment. Selon un exemple, l'élément sécurisé 105 peut comprendre un ou plusieurs propres processeurs du type du processeur 101, mémoires du type des mémoires 102, circuits d'entrée/sortie du type des circuits 103, et circuits mettant en oeuvre des fonctions diverses du type des circuits 106.

Le dispositif 100 comprend, en outre, un ou plusieurs circuits 106 (FCT) mettant en oeuvre une ou plusieurs fonctionnalités du dispositif 100. Selon un exemple, les circuits 106 peuvent comprendre des circuits de traitement spécifiques de données, comme des circuits de chiffrement, ou des circuits permettant d'effectuer des mesures, comme des capteurs. Selon un exemple, le ou les circuits 106 peuvent être configurés pour mettre en oeuvre le procédé d'authentification et/ou le compteur d'échecs décrits précédemment.

Le dispositif 100 comprend, en outre, un ou plusieurs bus de communication 107 permettant à tous les circuits du dispositif 100 de communiquer. En figure 1, un seul bus 107 reliant le processeur 101, la ou les mémoires 102, et les circuits 103 à 106 est représenté, mais en pratique, le dispositif 100 peut comprendre plusieurs bus de communication reliant ces différents éléments.

Selon un mode de réalisation particulier, le dispositif 100 est adapté à mettre en oeuvre au moins un compteur, par exemple en utilisant le processeur 101 ou un circuit dédié parmi les circuits 106.

Selon un autre mode de réalisation, le dispositif 100 est un système électronique complexe tel qu'un dispositif électronique programmable, comme un ordinateur. Selon encore un autre mode de réalisation, le dispositif 100 est constitué d'un seul processeur, ou microprocesseur, et d'une mémoire.

Selon un mode de réalisation, le dispositif 100 est un élément sécurisé comprenant au moins un processeur et une mémoire non volatile. Selon un mode de réalisation préféré, le dispositif 100 est un contrôleur, ou microcontrôleur, sécurisé.

La figure 2 est un schéma-bloc illustrant un mode de mise en oeuvre d'un procédé de protection 200, ou mécanisme de protection, d'un procédé d'authentification mis en oeuvre par un dispositif du dispositif 100 décrit en relation avec la figure 1.

Le procédé de protection 200 comprend la réécriture, et l'écriture le cas échéant, d'une ou plusieurs données stockées dans une mémoire non volatile du dispositif électronique, ces données sont aussi appelées balises (Tag). Selon un mode de réalisation, les données concernées sont stockées dans une mémoire non volatile du dispositif électronique. Selon un mode de réalisation préféré, les données concernées sont stockées dans une mémoire de type flash du dispositif électronique.

Dans la suite de la description, on appelle une cellule mémoire non écrite, ou cellule mémoire effacée, une cellule mémoire dont le contenu a été effacée et dont la lecture génère une erreur. Autrement dit, on appelle cellule mémoire non écrite, une cellule mémoire ne contenant pas de donnée. On appelle une cellule mémoire écrite, une cellule mémoire contenant une donnée écrite pendant une opération d'écriture, et dont la lecture renvoie la valeur de la donnée stockée.

De plus, dans la suite de la description, on appelle une opération d'écriture, une opération pendant laquelle une donnée est écrite dans une cellule mémoire non écrite, ou cellule mémoire effacée, et on appelle une opération de réécriture, une opération pendant laquelle une donnée est écrite dans une cellule mémoire écrite, c'est-à-dire une opération pendant laquelle une donnée est reprogrammée à la place de la donnée stockée dans la cellule mémoire écrite, ou encore une étape pendant laquelle une cellule mémoire est réécrite avec une autre donnée.

De plus, le procédé 200 utilise un ensemble E de cellules mémoire de la mémoire non volatile pour être mis en oeuvre. Chaque cellule mémoire est associée à, ou est localisée à, une adresse mémoire et est apte à stocker une donnée.

L'ensemble de cellules mémoire E comprend N couples de cellules mémoire, N étant un entier positif. Chaque couple de cellules mémoire est noté (ok(n), nok(n)), n étant un entier variant de 1 à N. La première cellule mémoire ok(n) d'un couple est liée aux réussites du procédé d'authentification, et la deuxième cellule nok(n) d'un couple est liée aux échecs du procédé d'authentification.

Les N couples compris dans l'ensemble E sont adressés séquentiellement de sorte que les couples soient sélectionnés successivement. Le couple courant est désigné comme étant le couple actif de l'ensemble. Pour être le couple actif, un couple doit comporter deux cellules mémoire écrites.

Selon un exemple particulier, l'ensemble E est une partie de la mémoire non volatile comprenant deux fois N cellules mémoire. Selon un exemple particulier, les cellules mémoire d'un même couple ont des adresses consécutives.

Le procédé de protection 200 comprend une étape initiale 201 (AUT) de mise en oeuvre du procédé d'authentification résultant soit en un échec (sortie N du bloc de l'étape 201) soit en une réussite (sortie Y du bloc de l'étape 201).

Lorsque l'étape 201 résulte en une réussite, l'étape suivante est une étape 202 (REWRITE) pendant laquelle une opération de réécriture de la première cellule mémoire ok(n) du couple actif liée aux réussites du procédé d'authentification est mise en oeuvre.

Lorsque l'étape 201 résulte en un échec, l'étape suivante est une étape 203 (REWRITE) pendant laquelle une opération de réécriture de la deuxième cellule mémoire nok(n) du couple actif liée aux échecs du procédé d'authentification est mise en oeuvre.

A une étape 204 (INC CNT), postérieure à l'étape 203, le compteur d'échecs associé au procédé d'authentification mis en oeuvre à l'étape 201 est incrémenté.

A une étape 205 (WRITE), postérieure à l'étape 204, deux opérations d'écriture d'un autre couple de cellules mémoire (ok(n+1), nok(n+1)) sont mises en oeuvre.

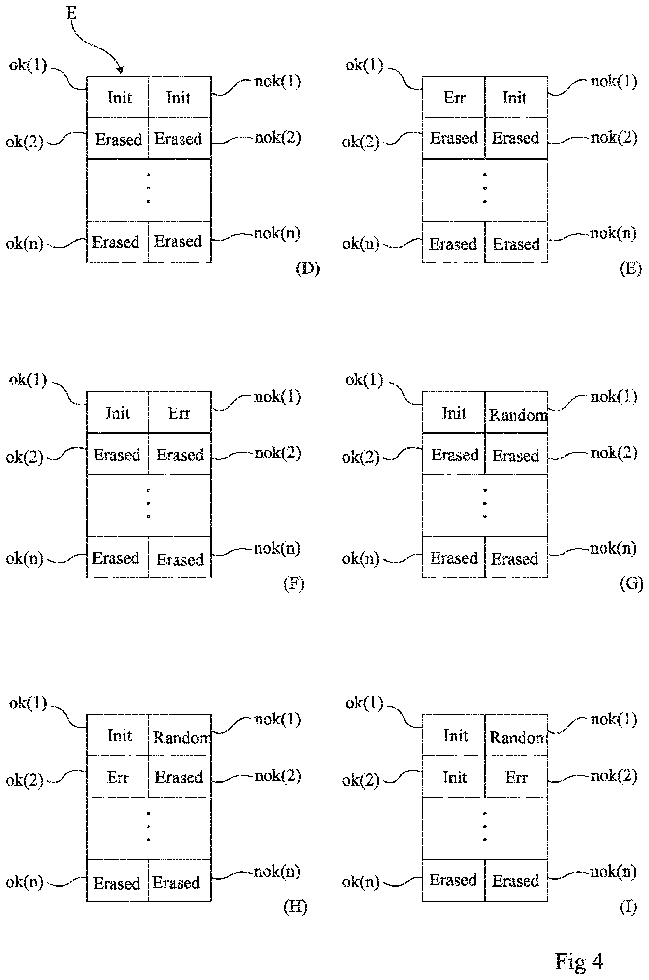

La figure 3 illustre plus en détails les opérations de réécriture et d'écriture mises en oeuvre pendant les étapes 202, 203 et 205. La figure 4 illustre plus en détails les avantages du procédé 200 face à une attaque par coupure d'alimentation.

Un avantage de ce mode de réalisation est que tant que les mises en oeuvre du procédé d'authentification résultent en des réussites, seule une opération de réécriture est réalisée. Autrement dit, une réussite d'un procédé d'authentification n'engendre pas l'écriture de données dans des cellules mémoire non écrites jusque-là. Le nombre d'opération d'effacement est donc limité. Cela a pour avantage de limiter l'usure de certaines mémoires comme les mémoires pour lesquelles une opération d'effacement est nécessaire.

La figure 3 est un schéma illustrant un exemple pratique des étapes de réécriture et d'écriture des cellules mémoire de l'ensemble E décrites en relation avec la figure 2.

Comme décrit précédemment, les étapes 202, 203 et 205 comprennent la réécriture, et l'écriture le cas échéant, d'une ou plusieurs données stockées dans des cellules mémoire d'une mémoire non volatile du dispositif électronique.

Le fonctionnement général du procédé 200 est le suivant.

A chaque fois que le procédé d'authentification présente une réussite, la première cellule mémoire ok(n) du couple actif (ok(n), nok(n)) est réécrite, et la deuxième cellule mémoire nok(n) est laissée inchangée, c'est l'étape 202 décrite en relation avec la figure 2. Plus particulièrement, le couple (ok(n), nok(n)) étant le couple actif, les cellules mémoire ok(n) et nok(n) sont des cellules mémoire écrites, et une donnée est réécrite dans la cellule mémoire ok(n) à la place de la donnée précédente. Le couple (ok(n), nok(n)) est toujours sélectionné comme étant le couple actif.

A chaque fois que le procédé d'authentification présente un échec, la deuxième cellule mémoire nok(n) du couple actif (ok(n), nok(n)) est réécrite, et la première cellule mémoire ok(n) est laissée inchangée, c'est l'étape 203 décrite en relation avec la figure 2. Plus particulièrement, une donnée est réécrite dans la cellule mémoire nok(n) à la place de la donnée précédente. Le compteur d'échecs est incrémenté, puis, des données sont écrites dans un autre couple (ok(i), nok(i)), i étant un entier variant de 1 à N et étant différent de n, ne comprenant que des cellules mémoire effacées, c'est l'étape 205 décrite en relation avec la figure 2. Selon un mode de réalisation particulier, l'autre couple (ok(i), nok(i)) est le couple de cellules mémoire suivant, c'est-à-dire le couple (ok(n+1 modulo N), nok(n+1 modulo N)). Le couple (ok(i), nok(i)) devient alors le nouveau couple actif, et le couple (ok(n), nok(n)) n'est plus le couple actif.

Selon un exemple particulier, à un état initial (A), aucun procédé d'authentification n'a encore été mis en oeuvre par le dispositif électronique, et seul un couple (ok(n), nok(n)) comprend des cellules mémoire écrites, par exemple le couple (ok(1), nok(1)). Ce couple (ok(1), nok(1)), est sélectionné pour être le couple actif. Selon un exemple, une donnée fixe Init est écrite dans les cellules mémoire ok(1), et nok(1). En conséquence, toutes les autres cellules mémoire des autres couples de l'ensemble sont effacées, c'est-à-dire les cellules des couples (ok(2), nok(2)) à (ok (N), nok(N)). En figure 3 et 4 les cellules mémoire effacées sont désignées par la référence Erased.

Si la mise en oeuvre suivante du procédé d'authentification résulte en une réussite, l'état suivant est un état (B), au contraire si la mise en oeuvre suivante du procédé d'authentification résulte en un échec, l'état suivant est un état (C).

A l'état (B), la mise en oeuvre précédente du procédé d'authentification est une réussite, en conséquence l'étape 202 de la figure 2 est mise en oeuvre. Autrement dit, une donnée Random est réécrite dans la cellule mémoire ok(1) à la place de la donnée fixe Init. Aucune autre opération de réécriture ou d'écriture n'est mise en oeuvre. Le couple (ok(1), nok(1)) reste le couple actif. Selon un mode de réalisation particulier, alors la donnée Random est, par exemple, une donnée aléatoire différente de la donnée fixe.

A l'état (C), la mise en oeuvre précédente du procédé d'authentification est un échec, en conséquence les étapes 203 à 205 de la figure 2 sont mises en oeuvre. Autrement dit, une donnée Random est réécrite dans la cellule mémoire nok(1). Le compteur d'échecs est incrémenté d'une unité. Et pour finir, des données sont écrites dans un autre couple de cellules mémoire comprenant des cellules mémoire effacées, par exemple le couple (ok(2), nok(2)). La donnée fixe Init est écrite dans la cellule mémoire ok(2) et dans la cellule mémoire nok(2). Ce couple (ok(2), nok(2)) devient le couple actif.

Par ailleurs, une fois que tous les couples de cellules mémoire sont écrites, une opération d'effacement des données écrites dans toutes les cellules mémoire de l'ensemble E est mise en oeuvre, et des données sont écrites dans les cellules mémoire d'un couple pour revenir à l'état initial (A). Selon une variante de réalisation, les cellules mémoire de l'ensemble E peuvent être effacées régulièrement par groupe. En effet, pour certains types de mémoires volatiles, comme les mémoires de type flash, une opération d'effacement d'une donnée écrite en mémoire comprend généralement l'effacement de données écrites dans un groupe élémentaire composé de plusieurs cellules mémoire, appelé page. Ainsi, à chaque fois qu'une page de l'ensemble E est complètement remplie, une opération d'effacement a lieu avant l'écriture de nouvelles données dans la page.

En utilisant le procédé de protection 200 décrit ici, il est possible de savoir si le procédé d'authentification a été visé par une attaque par coupure d'alimentation ou non. De plus, ce procédé de protection permet aussi de savoir si la dernière mise en oeuvre du procédé d'authentification a résulté en un succès ou en un échec, même dans le cas où une attaque par coupure de l'alimentation du dispositif électronique est exécutée. Ceci est décrit plus en détails en relation avec la figure 4.

De plus, comme dit précédemment, le mode de réalisation du procédé de protection peut être un produit-programme mis en oeuvre par un dispositif programmable ou un ordinateur. Par ailleurs, quand le mode de réalisation est un produit-programme d'ordinateur ou un produit-programme de dispositif programmable, il peut être enregistré dans un support d'enregistrement de données lisible par ordinateur ou par ledit dispositif programmable.

La figure 4 comprend des schémas illustrant l'état des cellules mémoire de l'ensemble E du procédé de protection après qu'une attaque par coupure d'alimentation ait été mise en oeuvre et que le dispositif ait été redémarré. Plus particulièrement, la figure 4 comprend six schémas (D), (E), (F), (G) (H) et (I) représentant les différents états possibles que peuvent présenter des couples de cellules mémoire de l'ensemble (E) suite à une réinitialisation.

Le schéma (D) représente l'état précédant à la mise en oeuvre du procédé d'authentification et précédant à l'exécution de l'attaque. Dans l'état du schéma (D), une donnée initiale Init a été écrite dans les cellules mémoire du couple (ok(1), nok(1)) qui est le couple actif. Dans cet exemple, la même donnée Init est écrite dans les deux cellules mémoire du couple actif au moment de son initialisation, et une donnée Random est réécrite à la place de la donnée Init dans la cellule mémoire correspondante pendant une étape de réécriture. Selon un mode de réalisation, les données Init et Random sont différentes, il est ainsi possible de différencier une donnée écrite (Init) d'une donnée réécrite (Random). Plus particulièrement, et selon un mode de réalisation, la donnée Init est une donnée à valeur fixe, et la donnée Random est une donnée aléatoire. D'autres états de départ peuvent être envisagés.

Le schéma (D) représente aussi l'état obtenu quand le procédé d'authentification a été mis en oeuvre et qu'une attaque par coupure d'alimentation a été exécutée juste avant la réalisation de l'étape de réécriture, que ce soit l'étape de réécriture de la cellule mémoire ok(1) ou celle de la cellule mémoire nok(1). Il est impossible à l'observation de cet état de déterminer si le procédé d'authentification a résulté en un succès ou en un échec, comme ce procédé est insensible aux attaques par canaux cachés. Ainsi, l'attaquant ne peut rien déduire de son attaque.

Le schéma (E) représente l'état apparent lorsque le procédé d'authentification a résulté en un succès et qu'une attaque par coupure d'alimentation a été exécutée pendant l'étape de réécriture de la cellule mémoire ok(1) avec la donnée Random, c'est-à-dire pendant l'étape 202 de la figure 2. L'étape de réécriture ayant été interrompue par l'attaque, la cellule mémoire ok(1) ne stocke plus la donnée Init, mais sa lecture renvoie la donnée Random ou une donnée indéterminée Err. Il est possible dans ce cas de déterminer que la dernière mise en oeuvre du procédé d'authentification est un succès, car la donnée stockée dans la cellule mémoire ok(1) est différente de la donnée Init. L'étape de réécriture de la cellule mémoire ok(1) peut être relancée, si nécessaire. De plus, un mécanisme de détection et/ou de correction d'erreur de la mémoire peut être mis en oeuvre ici. La mise en place d'un tel mécanisme peut être exécutée, de façon optionnelle, comme une alternative ou additionnellement au mode de réalisation pour déterminer si la dernière mise en oeuvre du procédé d'authentification a résulté en un succès.

Le schéma (F) représente l'état apparent lorsque le procédé d'authentification a résulté en un échec et qu'une attaque par coupure d'alimentation a été exécutée pendant l'étape de réécriture de la cellule mémoire nok(1) avec la donnée Random, c'est-à-dire pendant la mise en oeuvre de l'étape 203 de la figure 2. L'étape de réécriture ayant été interrompue par l'attaque, la cellule mémoire nok(1) ne stocke pas la donnée Init, mais sa lecture renvoie la donnée Random ou une erreur. Il est possible dans ce cas de déterminer que la dernière mise en oeuvre du procédé d'authentification est un échec, car la donnée stockée dans la cellule mémoire nok(1) est différente de la donnée Init, et parce que la donnée stockée dans la cellule mémoire ok(1) est la donnée Init. L'étape de réécriture de la cellule mémoire nok(1), l'étape d'incrémentation du compteur et les étapes d'écriture du couple suivant (ok(2), nok(2)) peuvent être relancées. Comme précédemment, un mécanisme de détection et/ou de correction d'erreur peut être mis en oeuvre ici.

Le schéma (G) représente l'état apparent lorsque le procédé d'authentification a résulté en un échec et qu'une attaque par coupure d'alimentation a été exécutée pendant l'étape d'incrémentation du compteur d'échecs associé au procédé d'authentification, c'est-à-dire pendant la mise en oeuvre de l'étape 204 de la figure 2. L'étape d'incrémentation ayant été interrompue par l'attaque, la valeur du compteur peut ne pas avoir été modifiée. De plus, les opérations d'écriture de l'étape 205 n'ont pas non plus pu être mise en oeuvre. Il est donc possible dans ce cas de déterminer que la dernière mise en oeuvre du procédé d'authentification est un échec. En effet, si le couple actif présente la donnée Random écrite dans sa deuxième cellule mémoire, c'est-à-dire la cellule mémoire nok(1) ici, et si les cellules ok(2) et nok(2) sont effacées, cela indique que l'étape de changement de couple actif n'a pas pu avoir lieu. L'étape d'incrémentation du compteur et les étapes d'écriture du couple suivant (ok(2), nok(2)) peuvent être relancées. Comme précédemment, un mécanisme de détection et/ou de correction d'erreur peut être mis en oeuvre ici. Il est à noter que si l'incrémentation du compteur a pu avoir lieu, le compteur sera incrémenté deux fois pour un seul échec du procédé d'authentification.

Le schéma (H) représente l'état apparent lorsque le procédé d'authentification a résulté en un échec et qu'une attaque par coupure d'alimentation a été exécutée pendant l'étape d'écriture de la donnée Init dans la cellule mémoire ok(2). L'étape d'écriture ayant été interrompue par l'attaque, la cellule mémoire ok(2) ne stocke pas la donnée Init, mais la donnée indéterminée Err, et la lecture de la cellule mémoire ok(2) renvoie une erreur ou une donnée différente de la valeur Init. Il est possible dans ce cas de déterminer que la dernière mise en oeuvre du procédé d'authentification est un échec, puisque la cellule mémoire nok(2) est effacée. Les étapes d'écriture du couple suivant (ok(2), nok(2)) peuvent être relancées. Une étape de lecture de la cellule mémoire nok(2) est mise en oeuvre pour vérifier si l'opération d'écriture a été effectuée correctement. Comme précédemment, un mécanisme de détection et/ou de correction d'erreur peut être mis en oeuvre ici.

Si l'attaque a lieu pendant l'étape d'incrémentation du compteur, ce dernier est incrémenté de nouveau à la réinitialisation suivante du dispositif.

Le schéma (I) représente l'état apparent lorsque le procédé d'authentification a résulté en un échec et qu'une attaque par coupure d'alimentation a été exécutée pendant l'étape d'écriture de la donnée Init dans la cellule mémoire nok(2). L'étape d'écriture ayant été interrompue par l'attaque, la cellule mémoire nok(2) ne stocke pas la donnée Init, et la lecture de la cellule mémoire nok(2) renvoie une erreur ou une donnée différente de la valeur Init. Il est possible dans ce cas de déterminer que la dernière mise en oeuvre du procédé d'authentification est un échec. L'étape d'écriture de la donnée Init dans la cellule mémoire nok(2) peut être relancée. Une étape de lecture de la cellule mémoire nok(2) est mise en oeuvre pour vérifier si l'opération d'écriture a été effectuée correctement. Comme précédemment, un mécanisme de détection et/ou de correction d'erreur peut être mis en oeuvre ici.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de protection (200) mis en oeuvre par un dispositif électronique (100) configuré pour mettre en oeuvre un procédé d'authentification (201) et comportant une mémoire non volatile (102), la mémoire (102) comprenant un ensemble (E) de couples ((ok(1), nok(1)), ..., (ok(N), nok(N)) de cellules mémoire dont au moins un premier couple ((ok(1), nok(1)) comprenant une première cellule mémoire (ok(1)) stockant une première donnée (Init) et une deuxième cellule mémoire (nok(1)) stockant une deuxième donnée (Init), le premier couple ((ok(1), nok(1)) étant désigné comme le couple actif, ledit procédé comprenant l'incrémentation d'un compteur d'échecs à chaque mise en oeuvre du procédé d'authentification résultant en un échec, **caractérisé en ce que** :
- à chaque mise en oeuvre du procédé d'authentification (201) résultant en une réussite la première cellule mémoire (ok(1)) dudit couple actif est réécrite avec une troisième donnée (Random) ;
- à chaque mise en oeuvre du procédé d'authentification résultant en un échec la deuxième cellule mémoire (nok(1)) dudit couple actif est réécrite avec une quatrième donnée (Random), puis ledit compteur d'échecs associé au procédé d'authentification est incrémenté, et enfin des cinquièmes données (Init) sont écrites dans une première et une deuxième cellules mémoire (ok(2), nok(2)) d'un deuxième couple ((ok(2), nok(2))) de cellules mémoire différent du premier couple ((ok(1), nok(1))), le deuxième couple ((ok(2), nok(2))) devenant le couple actif.

2. Dispositif électronique (100) configuré pour mettre en oeuvre un procédé d'authentification (201) et un procédé de protection (200), le dispositif électronique (100) comportant une mémoire non volatile (102) comprenant un ensemble (E) de couples ((ok(1), nok(1)), ..., (ok(N), nok(N)) de cellules mémoire dont au moins un premier couple ((ok(1), nok(1))) comprenant une première cellule mémoire (ok(1)) stockant une première donnée (Init) et une deuxième cellule mémoire (no(k1)) stockant une deuxième donnée (Init), le premier couple ((ok(1), nok(1))) étant sélectionné comme le couple actif, ledit procédé comprenant l'incrémentation d'un compteur d'échecs à chaque mise en oeuvre du procédé d'authentification résultant en un échec, **caractérisé en ce que** :
- à chaque mise en oeuvre du procédé d'authentification (201) résultant en une réussite la première cellule mémoire (ok(1)) dudit couple actif est réécrite avec une troisième donnée (Random) ;
- à chaque mise en oeuvre du procédé d'authentification résultant en un échec la deuxième cellule mémoire (nok(1)) dudit couple actif est réécrite avec une quatrième donnée (Random) puis ledit compteur d'échecs associé au procédé d'authentification est incrémenté, et enfin et des cinquièmes données (Init) sont écrites dans une première et une deuxième cellules mémoire (ok(2), nok(2)) d'un deuxième couple ((ok(2), nok(2))) de cellules mémoire différent du premier couple ((ok(1), nok(1))), le deuxième couple ((ok(2), nok(2))) devenant le couple actif.

3. Procédé selon la revendication 1, ou dispositif selon la revendication 2, dans lequel dans un état initial toutes les cellules mémoire de l'ensemble (E) sont effacées à l'exception des cellules mémoire du premier couple ((ok(1), nok(1))), le premier couple étant le couple actif.

4. Procédé ou dispositif selon la revendication 3, dans lequel quand l'ensemble (E) ne comprend que des cellules mémoire écrites et qu'une nouvelle mise en oeuvre du procédé d'authentification résulte en un échec, une étape de remise à l'état initial est exécutée.

5. Procédé selon l'une quelconque des revendications 1, 3 ou 4, ou dispositif selon l'une quelconque des revendications 2 à 4, dans lequel la mémoire (102) est une mémoire de type flash.

6. Procédé selon l'une quelconque des revendications 1, 3 à 5, ou dispositif selon l'une quelconque des revendications 2 à 5, dans lequel les première, deuxième, et cinquièmes données (Init) sont toutes identiques, et les troisième et quatrième données (Random) sont des données aléatoires.

7. Produit-programme d'ordinateur mettant en oeuvre le procédé selon l'une quelconque des revendications 1 à 6.

8. Support d'enregistrement de données lisible par ordinateur comprenant un produit-programme d'ordinateur selon la revendication 7.

## Patentansprüche

1. Ein Schutzverfahren (200), das von einem elektronischen Gerät (100) implementiert wird, das zum Implementieren eines Authentifizierungsverfahrens (201) konfiguriert ist und einen Speicher (102) aufweist, wobei der nichtflüchtige Speicher (102) eine Anordnung (E) von Paaren ((ok(1), nok(1)), ..., (ok(N), nok(N)) von Speicherzellen aufweist, die mindestens ein erstes Paar ((ok(1), nok(1)) enthalten, welches eine erste Speicherzelle (ok(1)) aufweist, die ein erstes Datenelement (Init) speichert, und eine zweite Speicherzelle (no(k1)) aufweist, die ein zweites Datenelement (Init) speichert, wobei das erste Paar ((ok(1), nok(1)) als aktives Paar bezeichnet wird, wobei das Verfahren Inkrementieren eines Fehlerzählers aufweist, und zwar bei jeder Implementierung des Authentifizierungsverfahrens, die zu einem Fehler führt, **dadurch gekennzeichnet, dass**:
- bei jeder Implementierung des Authentifizierungsverfahrens (201), die zu einem Erfolg führt, die erste Speicherzelle (ok(1)) des aktiven Paares mit einem dritten Datenelement (Random) überschrieben wird;
- bei jeder Ausführung des Authentifizierungsverfahrens, die zu einem Fehler führt, die zweite Speicherzelle (nok(1)) des aktiven Paares mit einem vierten Datenelement (Random) überschrieben wird, woraufhin der Fehlerzähler, der mit dem Authentifizierungsverfahren verknüpft ist, inkrementiert wird, und schließlich fünfte Datenelemente (Init) in eine erste und eine zweite Speicherzelle (ok(2), nok(2)) eines zweiten Paares ((ok(2), nok(2))) von Speicherzellen geschrieben werden, das sich vom ersten Paar ((ok(1), nok(1))) unterscheidet, wobei das zweite Paar ((ok(2), nok(2))) zum aktiven Paar wird.

2. Ein Elektronisches Gerät (100), das zum Implementieren eines Authentifizierungsverfahrens (201) und eines Schutzverfahrens (200) konfiguriert ist, wobei das elektronische Gerät (100) einen nichtflüchtigen Speicher (102) aufweist, wobei der Speicher (102) eine Anordnung (E) von Paaren ((ok(1), nok(1)), ..., (ok(N), nok(N)) von Speicherzellen aufweist, die wenigstens ein erstes Paar ((ok(1), nok(1)) enthalten, welches eine erste Speicherzelle (ok(1)) aufweist, die ein erstes Datenelement (Init) speichert, und eine zweite Speicherzelle (no(k1)) aufweist, die ein zweites Datenelement (Init) speichert, wobei das erste Paar ((ok(1), nok(1)) als aktives Paar bezeichnet wird, wobei das Verfahren Inkrementieren eines Fehlerzählers aufweist, und zwar bei jeder Implementierung des Authentifizierungsverfahrens , die zu einem Fehler führt, **dadurch gekennzeichnet, dass**:
- bei jeder Implementierung des Authentifizierungsverfahrens (201), die zu einem Erfolg führt, die erste Speicherzelle (ok(1)) des aktiven Paares mit einem dritten Datenelement (Random) überschrieben wird;
- bei jeder Ausführung des Authentifizierungsverfahrens, die zu einem Fehler führt, die zweite Speicherzelle (nok(1)) des aktiven Paares mit einem vierten Datenelement (Random) überschrieben wird, woraufhin der Fehlerzähler, der mit dem Authentifizierungsverfahren verknüpft ist, inkrementiert wird, und schließlich fünfte Datenelemente (Init) in eine erste und eine zweite Speicherzelle (ok(2), nok(2)) eines zweiten Paares ((ok(2), nok(2))) von Speicherzellen geschrieben werden, das sich vom ersten Paar ((ok(1), nok(1))) unterscheidet, wobei das zweite Paar ((ok(2), nok(2))) zum aktiven Paar wird.

3. Das Verfahren nach Anspruch 1 oder das Gerät nach Anspruch 2, wobei in einem Initialzustand alle Speicherzellen der Anordnung (E) gelöscht sind, mit Ausnahme der Speicherzellen des ersten Paares ((ok(1), nok(1))), wobei das erste Paar das aktive Paar ist.

4. Das Verfahren oder das Gerät nach Anspruch 3, wobei, wenn die Anordnung (E) nur beschriebene Speicherzellen aufweist und eine neue Implementierung des Authentifizierungsverfahrens zu einem Fehler führt, eine Phase des Zurücksetzens auf den Initialzustand ausgeführt wird.

5. Das Verfahren nach einem der Ansprüche 1, 3 oder 4 oder das Gerät nach einem der Ansprüche 2 bis 4, wobei der Speicher (102) ein Flash-Speicher ist.

6. Das Verfahren nach einem der Ansprüche 1, 3 bis 5 oder das Gerät nach einem der Ansprüche 2 bis 5, wobei das erste, zweite und fünfte Datenelement (Init) alle identisch sind und das dritte und vierte Datenelement (Random) Zufallsdaten sind.

7. Ein Computerprogrammprodukt, das das Verfahren nach einem der Ansprüche 1 bis 6 implementiert.

8. Ein Träger zum Aufzeichnen computerlesbarer Daten, aufweisend ein Computerprogrammprodukt nach Anspruch 7.

## Claims

1. Protection method (200) implemented by an electronic device (100) configured to implement an authentication method (201) and comprising a memory (102), the non-volatile memory (102) comprising an assembly (E) of pairs ((ok(1), nok(1)), ..., (ok(N), nok(N)) of memory cells including at least one first pair ((ok(1), nok(1)) comprising a first memory cell (ok(1)) storing a first data element (Init) and a second memory cell (no(k1)) storing a second data element (Init), the first pair ((ok(1), nok(1)) being designated as the active pair, said method comprising incrementing a failure counter at each at each implementation of the authentication method resulting in a failure, **characterized in that**:
- at each implementation of the authentication method (201) resulting in a success, the first memory cell (ok(1)) of said active pair is rewritten into with a third data element (Random);
- at each implementation of the authentication method resulting in a failure, the second memory cell (nok(1)) of said active pair is rewritten into with a fourth data element (Random), after which said failure counter associated with the authentication method is incremented, and finally fifth data elements (Init) are written into a first and a second memory cells (ok(2), nok(2)) of a second pair ((ok(2), nok(2))) of memory cells different from the first pair ((ok(1), nok(1))), the second pair ((ok(2), nok(2))) becoming the active pair.

2. Electronic device (100) configured to implement an authentication method (201) and a protection method (200), the electronic device (100) comprising a non-volatile memory (102), the memory (102) comprising an assembly (E) of pairs ((ok(1), nok(1)), ..., (ok(N), nok(N)) of memory cells including at least one first pair ((ok(1), nok(1)) comprising a first memory cell (ok(1)) storing a first data element (Init) and a second memory cell (no(k1)) storing a second data element (Init), the first pair ((ok(1), nok(1)) being designated as the active pair wherein, said method comprising incrementing a failure counter at each at each implementation of the authentication method resulting in a failure, **characterized in that**:
- at each implementation of the authentication method (201) resulting in a success, the first memory cell (ok(1)) of said active pair is rewritten into with a third data element (Random);
- at each implementation of the authentication method resulting in a failure, the second memory cell (nok(1)) of said active pair is rewritten into with a fourth data element (Random), after which said failure counter associated with the authentication method is incremented, and finally fifth data elements (Init) are written into a first and a second memory cells (ok(2), nok(2)) of a second pair ((ok(2), nok(2))) of memory cells different from the first pair ((ok(1), nok(1))), the second pair ((ok(2), nok(2))) becoming the active pair.

3. Method according to claim 1, or device according to claim 2, wherein in an initial state all the memory cells of the assembly (E) are erased except for the memory cells of the first pair ((ok(1), nok(1))), the first pair being the active pair.

4. Method or device according to claim 3, wherein when the assembly (E) only comprises written memory cells and a new implementation of the authentication method results in a failure, a phase of resetting to the initial state is executed.

5. Method according to any of claims 1, 3 or 4, or device according to any of claims 2 to 4, wherein the memory (102) is a Flash-type memory.

6. Method according to any of claims 1, 3 to 5, or device according to any of claims 2 to 5, wherein the first, second, and fifth data elements (Init) are all identical, and the third and fourth data elements (Random) are random data.

7. Computer program product implementing the method according to any of claims 1 to 6.

8. Support for recording computer-readable data comprising a computer program product according to claim 7.
